# EUROPÄISCHE PATENTSCHRIFT

(11) **EP 1 312 528 B1**
(45) Veröffentlichungstag und Bekanntmachung des Hinweises auf die Patenterteilung: **06.12.2006**
(21) Anmeldenummer: 02024208.7
(22) Anmeldetag: 30.10.2002
(51) Int. Cl.: B61F 1/00, B61D 17/10, B62D 21/10

(54) **Bodengruppe eines Wagenkastens, insbesondere für Schienenfahrzeuge**
Underbody of a vehicle body, especially for railway vehicles
Dessous de caisse d'une caisse de véhicule, notamment pour véhicules ferroviaires

(30) Priorität: 14.11.2001 DE 10155948
(43) Veröffentlichungstag der Anmeldung: 21.05.2003
(73) Patentinhaber: SIEMENS AKTIENGESELLSCHAFT, 80333 München (DE)
(72) Erfinder: Kortemeyer, Alfred, 40721 Hilden (DE); Schillings, Dirk, 41472 Neuss (DE); Schnaas, Jürgen, 42799 Leichlingen (DE)

(56) Entgegenhaltungen:
- EP-A- 0 433 903
- DE-A- 3 422 320
- GB-A- 349 894
- US-A- 5 054 403

## Beschreibung

Die Erfindung betrifft die Bodengruppe eines Wagenkastens, insbesondere für Schienenfahrzeuge, mit zumindest einer Bodenplatte und einem für Radkästen vorgesehenen Bereich.

Durch die DE 196 18 637 A1 und speziell durch die Zeitschrift "Der Nahverkehr", Nr. 6/96, Seite 50, ist ein als zweiachsiges Fahrwerkmodul ausgeführter Wagenkasten eines niederflurigen Straßenbahnfahrzeuges bekannt. Bei diesem Wagenkasten besteht die Bodengruppe im wesentlichen aus einer mittigen, horizontal verlaufenden Bodenplatte mit seitlichen, rampenförmigen Abschnitten, zwei Endquerträgern, aus Blechen hergestellten Radkästen sowie seitlichen Brüstungsträgern als Ersatz für bei anderen Bauweisen übliche durchgehende Langträger. Die vorgenannten Bauelemente sind durch Schweißen miteinander verbunden. Bei derartigen Schweißkonstruktionen treten unabhängig davon, ob sie aus Aluminium oder Stahl erstellt sind, durch Schweißwärme und Schrumpf relativ hohe Verformungen (Schweißverzug) auf, deren Ausgleich durch nachträgliches Richten einen beträchtlichen Aufwand verursacht. Besonders bei Schweißkonstruktionen aus Aluminium müssen Festigkeitsverluste im Bereich der Schweißnähte berücksichtigt werden, entweder durch Reduzieren der zulässigen Spannungen oder durch Vergrößern der Wanddicken mit der Folge eines Gewichtsanstiegs. Im Hinblick auf Schweißkonstruktionen aus Stahl wird speziell als nachteilig angesehen, daß wegen einer kaum möglichen Funktionsintegration viele Anschweißteile und Anschraubteile eingesetzt werden müssen (große Anzahl und Vielfalt von Teilen) und außerdem der Korrosionsschutz unter anderem aufgrund von Materialdoppelungen aufwendig ist. Zusammenfassend betrachtet sind als Schweißkonstruktion ausgeführte Wagenkästen sehr kostenintensiv.

Der Erfindung liegt die Aufgabe zugrunde, eine Bodengruppe der gattungsgemäßen Art unter Beseitigung der vorgenannten Nachteile auf möglichst einfache und von den Kosten her günstige Weise so auszubilden, daß vor allem eine hohe Maßgenauigkeit, eine den Beanspruchungen angepaßte Festigkeit bei niedrigem Gewicht und eine weitgehende Integration von Teilen erreichbar sind.

Diese Aufgabe wird erfindungsgemäß dadurch gelöst, daß die Bodenplatte und der Radkastenbereich einstückig durch ein Gußteil oder ein gekantetes Blechelement oder ein hydrogeformtes Blechelement gebildet sind.

Vorteilhafte Ausgestaltungen der Erfindung sind in den Unteransprüchen angegeben.

Der Gegenstand nach der Erfindung zeichnet sich insbesondere dadurch aus, daß das Gußteil oder die vorgesehenen Blechelemente mit einer hohen Genauigkeit hergestellt werden können, wobei abgesehen von einer eventuellen mechanischen Bearbeitung durch z. B. Bohren oder Fräsen keine kostenintensiven Richtarbeiten auszuführen sind. Weiter vorteilhaft kann speziell das Gußteil ohne weiteres den Beanspruchungen angepaßte Wandungen (also im Bereich höherer Spannungen dicker und im Bereich geringerer Spannungen dünner) und damit ein günstiges Gewicht aufweisen.

Im weiteren wird die Erfindung anhand von Ausführungsbeispielen näher beschrieben, die in der Zeichnung prinzipartig dargestellt sind. Es zeigen
- Fig. 1: eine als Gußteil aus Aluminium oder Stahl mögliche Bodengruppe hier am Beispiel der Bestandteile einer Schweißkonstruktion,
- Fig. 2: eine Bodengruppe als gekantetes Blechelement,
- Fig. 3: eine Bodengruppe als gekantetes Blechelement mit Radkästen, die durch entgegengerichtetes Biegen geformt sind,
- Fig. 4: eine Bodengruppe als gekantetes Blechelement mit Radkästen, die durch Hydroformen erzeugt sind,
- Fig. 5: eine Bodengruppe mit Radkästen als komplett hydrogeformtes Blechelement.

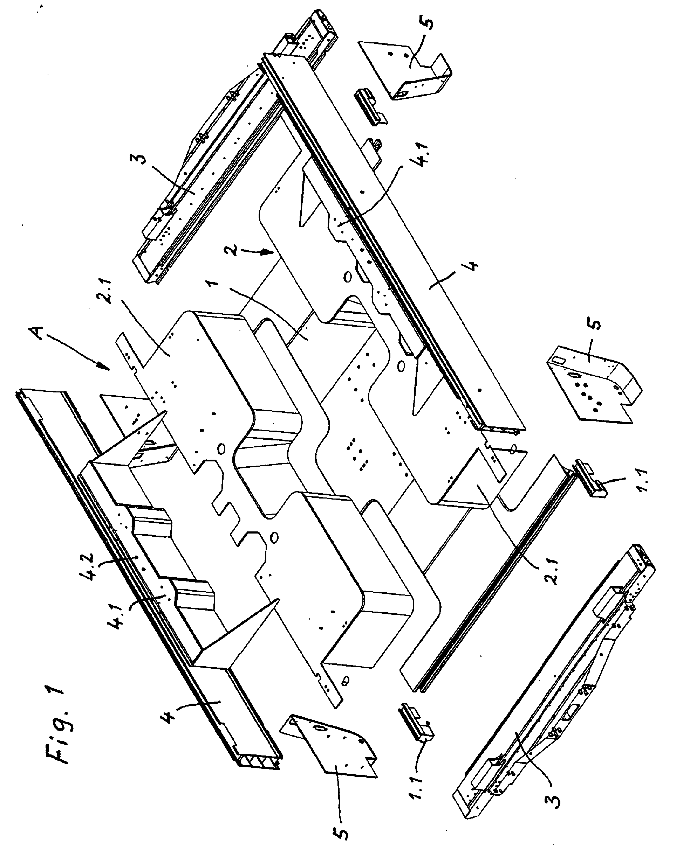

Die Fig. 1 zeigt die Bestandteile der Bodengruppe eines Wagenkastens, und zwar eine Bodenplatte 1 mit kurzen Untergurten 1.1, Radkastenbereiche 2 mit nach unten offenen Radkästen 2.1, jeweils für den Anschluß eines Wagengelenks gestaltete Endquerträger 3, seitliche Brüstungsträger 4 mit Aufnahmen 4.1 für Sekundärfedern und Aufnahmen 4.2 für Vertikaldämpfer sowie Geräteplatten 5, die einer Befestigung von Komponenten (wie z. B. Hydrogerät einer Bremse, Spurkranzschmieranlage oder dgl.) dienen. Die vorgenannten Bestandteile der Bodengruppe können im Idealfall insgesamt einstückig durch ein einziges Gußteil A gebildet sein. Zumindest aber ist vorgesehen, daß die Bodengruppe als Gußteil die Bodenplatte 1 und die Radkastenbereiche 2 mit den Radkästen 2.1 umfaßt, wobei dann wahlweise ein oder mehrere der definierten Bestandteile 3, 4, 5 in dieses Gußteil einbezogen oder durch geeignete Verbindungstechnik (Schweißen, Schrauben, Nieten, Kleben) an diesem Gußteil befestigt sein können. Vorzugsweise sind in das Gußteil auch in Fig. 1 nicht dargestellte, unterhalb der Bodenplatte 1 angeordnete Anschlüsse für Längslenker sowie für Querdämpfer zum Verbinden zumindest eines Fahrwerks mit dem Wagenkasten (siehe DE 198 23 010 A1) integriert.

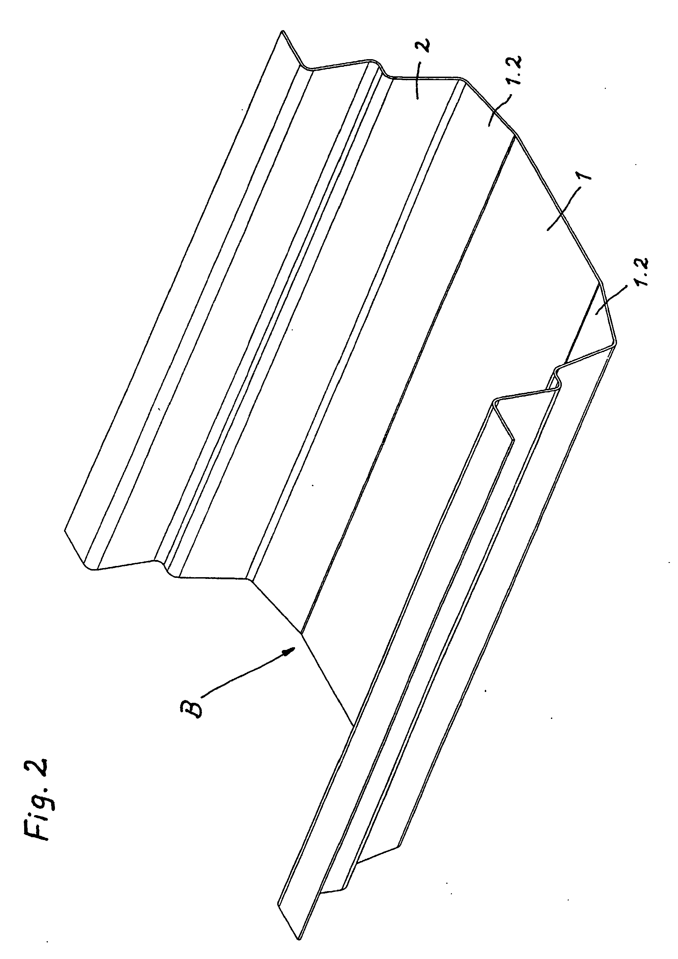

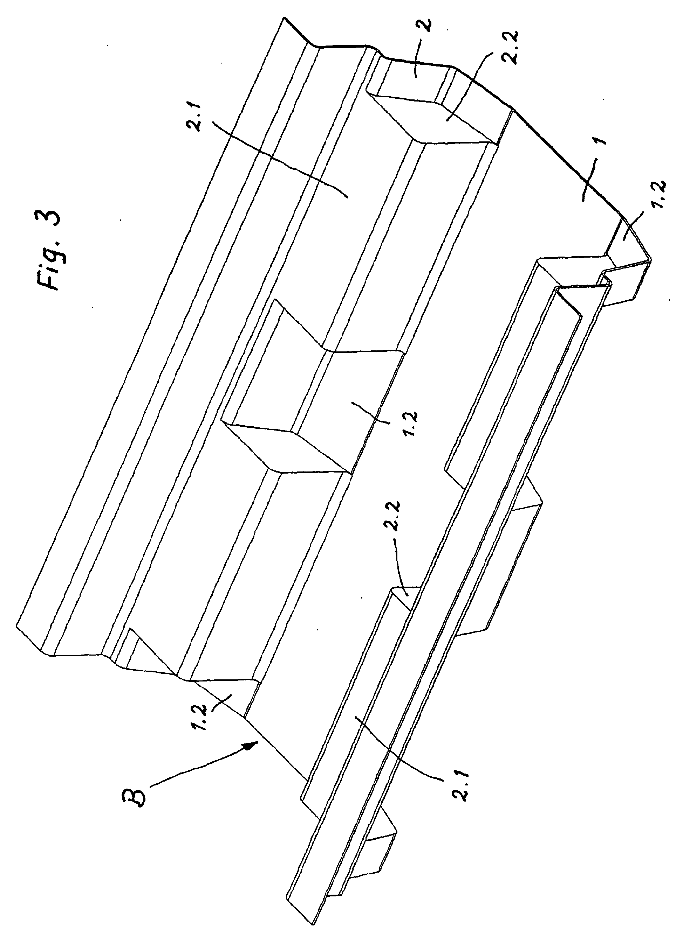

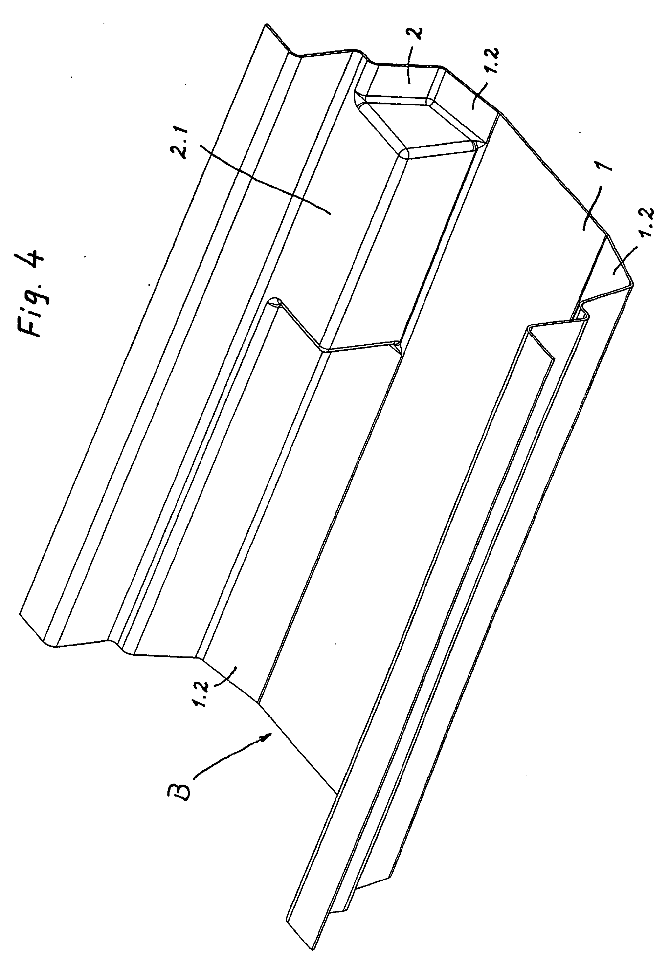

In den Ausführungsbeispielen nach Fig. 2, 3 und 4 sind jeweils die Bodenplatte 1 und der Radkastenbereich 2 einstückig durch ein gekantetes Blechelement B aus Aluminium oder Stahl gebildet. Um die nach unten offenen Radkästen 2.1 zu erzeugen, erhält das in Fig. 2 gezeigte Blechelement B entsprechende Ausschnitte, die dann durch gesonderte Kappen abgedeckt werden, die beispielsweise eine der Fig. 4 ähnliche Form aufweisen. Gemäß Fig. 3 sind die Radkästen 2.1 dadurch geformt, daß das Blechelement B nach örtlichen Einschnitten in seinem Radkastenbereich 2 entgegengerichtet gebogen wird. Die so geschaffenen, zunächst seitlich offenen Radkästen 2.1 sind durch angeschweißte oder angeklebte Ergänzungsstücke 2.2 geschlossen. Das Blechelement B nach Fig. 4 hat durch Hydroformen im Radkastenbereich 2 erzeugte geschlossene Radkästen 2.1. Um den Werkzeugaufwand für das Hydroformen so gering wie möglich zu halten, werden alle Radkästen 2.1 nacheinander an der Stelle geformt, die der in Fig. 4 gezeigte Radkasten 2.1 einnimmt, wobei das Blechelement B entsprechend seitlich verlagert bzw. um 180° gedreht wird.

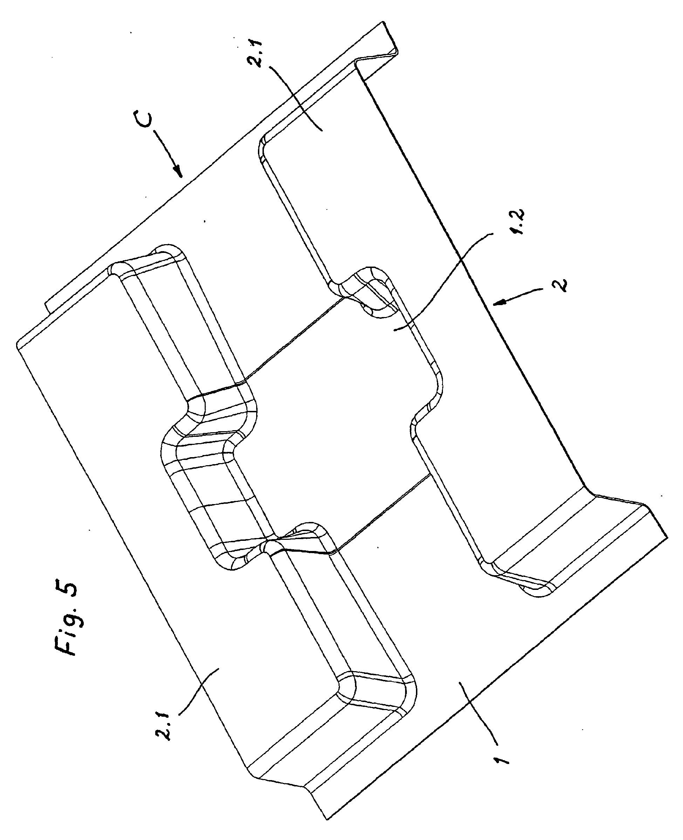

Bei der Bodengruppe nach Fig. 5 sind die Bodenplatte 1 und der Radkastenbereich 2 mit den Radkästen 2.1 einstückig durch ein hydrogeformtes Blechelement C gebildet. Das Verfahren des Hydroformens (Hydroforming) wird auch als Hochdruck-Umformen bezeichnet. Hierbei wird ein Ausgangsteil durch Flüssigkeit (Wasser, Öl, Emulsion u. ä.) unter dominierender Streckziehund/oder Tiefziehbeanspruchung geformt.

Bei den gekanteten Blechelementen B und bei dem hydrogeformten Blechelement C weist die Bodenplatte 1 neben den Radkästen 2.1 liegende abgeschrägte Bodenbereiche 1.2 auf, die jeweils zur Wagenlängsmitte hin geneigt sind (siehe Fig. 2 bis 5). Durch diese abgeschrägten Bodenbereiche 1.2 fällt im Wagenkasten auftretender Schmutz stets in Richtung auf die Wagenmitte und kann dort leicht entfernt werden. Solche abgeschrägten Bodenbereiche 1.2 sind auch bei der beschriebenen Ausbildung der Bodengruppe als Gußteil A möglich.

Die weiter oben genannten Endquerträger 3, Brüstungsträger 4 und Geräteplatten 5 werden beispielsweise durch die Verbindungsarten Schweißen, Schrauben, Nieten, Kleben an dem gekanteten Blechelement B oder an dem hydrogeformten Blechelement C befestigt.

### Liste der Bezugszeichen

- A: Gußteil
- B: gekantetes Blechelement
- C: hydrogeformtes Blechelement
- 1: Bodenplatte
- 1.1: kurzer Untergurt
- 1.2: abgeschrägter Bodenbereich
- 2: Radkastenbereich
- 2.1: Radkasten
- 2.2: Ergänzungsstück
- 3: Endquerträger
- 4: Brüstungsträger
- 4.1: Aufnahme für Sekundärfeder
- 4.2: Aufnahme für Vertikaldämpfer
- 5: Geräteplatte

## Patentansprüche

1. Bodengruppe eines Wagenkastens, insbesondere für Schienenfahrzeuge, mit zumindest einer Bodenplatte (1) und einem für Radkästen (2.1) vorgesehenen Bereich (2) **dadurch gekennzeichnet, daß** die Bodenplatte (1) und der Radkastenbereich (2) einstückig durch ein Gußteil (A) oder ein gekantetes Blechelement (B) oder ein hydrogeformtes Blechelement (C) gebildet sind.

2. Bodengruppe nach Anspruch 1, **dadurch gekennzeichnet, daß** das Gußteil (A) die nach unten offenen Radkästen (2.1) aufweist.

3. Bodengruppe nach Anspruch 1 oder 2, **dadurch gekennzeichnet, daß** das Gußteil (A) mit Endquerträgern (3) versehen ist, die jeweils für den Anschluß eines Wagengelenkes ausgebildet sind.

4. Bodengruppe nach einem der Ansprüche 1 bis 3, **dadurch gekennzeichnet, daß** das Gußteil (A) seitliche Brüstungsträger (4) als untere Bestandteile der Wagenseitenwände beinhaltet.

5. Bodengruppe nach Anspruch 4, **dadurch gekennzeichnet, daß** an den seitlichen Brüstungsträgern (4) Aufnahmen (4.1, 4.2) für Sekundärfedern und/oder Vertikaldämpfer ausgebildet sind.

6. Bodengruppe nach einem der Ansprüche 1 bis 5, **dadurch gekennzeichnet, daß** das Gußteil (A) einer Befestigung von Komponenten - wie Hydrogerät (Bremse), Spurkranzschmieranlage oder dgl. - dienende Geräteplatten (5) aufweist.

7. Bodengruppe nach einem der Ansprüche 1 bis 6, **dadurch gekennzeichnet, daß** in das Gußteil (A) unterhalb der Bodenplatte (1) angeordnete Anschlüsse für Längslenker sowie für Querdämpfer integriert sind, die der Verbindung des Wagenkastens mit zumindest einem Fahrwerk dienen.

8. Bodengruppe nach Anspruch 1, **dadurch gekennzeichnet, daß** das gekantete Blechelement (B) durch in seinem Radkastenbereich (2) entgegengerichtes Biegen geformte Radkästen (2.1) aufweist, wobei diese zunächst seitlich offenen Radkästen (2.1) durch Ergänzungsstücke (2.2) geschlossen sind.

9. Bodengruppe nach Anspruch 1, **dadurch gekennzeichnet, daß** das gekantete Blechelement (B) durch Hydroformen in seinem Radkastenbereich (2) erzeugte, geschlossene Radkästen (2.1) aufweist.

10. Bodengruppe nach einem der Ansprüche 1 bis 9, **dadurch gekennzeichnet, daß** die Bodenplatte (1) neben den Radkästen (2.1) liegende abgeschrägte Bodenbereiche (1.2) aufweist, die jeweils zur Wagenlängsmitte hin geneigt sind.

## Claims

1. Floor assembly of a coach body, especially for rail vehicles, having at least a floor pan (1) and a region (2) provided for wheel housings (2.1), **characterized in that** the floor pan (1) and the wheel housing region (2) are formed in one piece by a casting (A) or a bent sheet-metal element (B) or a hydroformed sheet-metal element (C).

2. Floor assembly according to Claim 1, **characterized in that** the casting (A) has the downwardly open wheel housings (2.1).

3. Floor assembly according to Claim 1 or 2, **characterized in that** the casting (A) is provided with end cross beams (3), which are respectively configured for the connection of a coach joint.

4. Floor assembly according to one of Claims 1 to 3, **characterized in that** the casting (A) contains lateral breast beams (4) as lower component parts of the coach side walls.

5. Floor assembly according to Claim 4, **characterized in that** on the lateral breast beams (4) there are configured receiving fixtures (4.1, 4.2) for secondary springs and/or vertical dampers.

6. Floor assembly according to one of Claims 1 to 5, **characterized in that** the casting (A) has instrument panels (5) serving for the attachment of components - such as hydraulic equipment (brake), wheel flange lubricating system or the like.

7. Floor assembly according to one of Claims 1 to 6, **characterized in that** connections for longitudinal control arms and for transverse dampers, which connections are disposed beneath the floor pan (1), are integrated in the casting (A) and serve to connect the coach body to at least a chassis.

8. Floor assembly according to Claim 1, **characterized in that** the bent sheet-metal element (B) has wheel housings (2.1) formed by bending that is oppositely directed in its wheel housing region (2), these initially laterally open wheel housings (2.1) being closed by complementary pieces (2.2).

9. Floor assembly according to Claim 1, **characterized in that** the bent sheet-metal element (B) has closed wheel housings (2.1) produced in its wheel housing region (2) by hydroforming.

10. Floor assembly according to one of Claims 1 to 9, **characterized in that** the floor pan (1) has bevelled floor regions (1.2) which lie next to the wheel housings (2.1) and are respectively inclined towards the longitudinal centre of the coach.

## Revendications

1. Dessous de caisse d'une voiture, en particulier pour des véhicules sur rails, comportant au moins un plancher (1) et une zone (2) prévue pour des arches de roue (2.1), **caractérisé en ce que** le plancher (1) et la zone d'arche de roue (2) forment une seule pièce par une pièce coulée (A) ou par un élément en tôle (B) plié à arêtes vives ou par un élément en tôle (C) hydroformé.

2. Dessous de caisse selon la revendication 1, **caractérisé en ce que** la pièce coulée (A) comprend les arches de roue (2.1) ouvertes vers le bas.

3. Dessous de caisse selon la revendication 1 ou 2, **caractérisé en ce que** la pièce coulée (A) est munie de traverses d'extrémité (3) dont chacune est conçue pour se raccorder à une articulation de voiture.

4. Dessous de caisse selon l'une des revendications 1 à 3, **caractérisé en ce que** la pièce coulée (A) comporte des longerons d'appui (4) latéraux comme composants inférieurs des parois latérales de la voiture.

5. Dessous de caisse selon la revendication 4, **caractérisé en ce que** des logements (4.1, 4.2) pour des ressorts secondaires et/ou des amortisseurs verticaux sont formés sur les longerons d'appui (4) latéraux.

6. Dessous de caisse selon l'une des revendications 1 à 5, **caractérisé en ce que** la pièce coulée (A) comporte des plaques d'appareillage (5) qui servent à fixer des composants - comme l'appareil hydraulique (freins), l'installation de lubrification des boudins ou analogues.

7. Dessous de caisse selon l'une des revendications 1 à 6, **caractérisé en ce que** des raccords disposés au-dessous du plancher (1) et destinés à des bras oscillants longitudinaux et à des amortisseurs transversaux sont intégrés dans la pièce coulée (A) et servent à relier la caisse à au moins un train roulant.

8. Dessous de caisse selon la revendication 1, **caractérisé en ce que** l'élément en tôle (B) pliée à arêtes vives comporte des arches de roue (2.1) formées par pliage en sens opposé dans sa zone d'arche de roue (2), ces arches de roue (2.1) d'abord ouvertes de côté étant fermées par des pièces complémentaires (2.2).

9. Dessous de caisse selon la revendication 1, **caractérisé en ce que** l'élément en tôle (B) pliée à arêtes vives comporte des arches de roue (2.1) fermées et produites par hydroformage dans sa zone d'arche de roue (2).

10. Dessous de caisse selon l'une des revendications 1 à 9, **caractérisé en ce que** le plancher (1) comporte des zones de plancher (1.2) chanfreinées placées à côté des arches de roue (2.1) et respectivement inclinées vers le milieu longitudinal de la voiture.
